# EUROPÄISCHE PATENTANMELDUNG

(11) **EP 0 703 257 A1**
(43) Veröffentlichungstag der Anmeldung: **27.03.1996**
(21) Anmeldenummer: 95111564.1
(22) Anmeldetag: 22.07.1995
(51) Int. Cl.: C08G 18/80, C08G 18/08

(54) **Verfahren zur Herstellung von hitzehärtbaren, witterungsbeständigen PUR-Pulver-Massen**

(30) Priorität: 20.09.1994 DE 4433367
(71) Anmelder: HÜLS AKTIENGESELLSCHAFT, D-45764 Marl (DE)
(72) Erfinder: Gras, Rainer, Dr., D-44879 Bochum (DE); Schmitt, Felix, Dr., D-45701 Herten (DE); Wolf, Elmar, Dr., D-45661 Recklinghausen (DE)

(57) **Zusammenfassung**

Verfahren zur Herstellung von hitzehärtbaren, witterungsbeständigen PUR-Pulver-Massen, bestehend aus
A) mindestens einem (cyclo)-aliphatischen Polyisocyanat mit einer NCO-Funktionalität von 2 - 6,
B) mindestens einem Blockierungsmittel für die Isocyanatgruppen,
C) mindestens einem Polyol mit einer OH-Funktionalität von 2 - 5,
D) ggf. weiteren Hilfs- und Zusatzmitteln,
dadurch gekennzeichnet, daß man die Komponenten A - C und ggf. D bei 80 bis 120 °C in einer Knetkammer oder einem Extruder miteinander mischt und dabei zur Reaktion bringt, wobei pro NCO-Äquivalent 0.7 - 1 OH-Äquivalente des Polyols und 0.5 - 1 mol Oxim B zur Reaktion gebracht werden.

## Beschreibung

Gegenstand der vorliegenden Erfindung ist ein vereinfachtes Verfahren zur Herstellung von hitzehärtbaren, witterungsbeständigen PUR-Pulver-Massen.

Hitzehärtbare pulverförmige Massen, die man durch Reaktion eines hydroxylgruppenhaltigen Harzes mit einem maskierten Polyisocyanat erhält, gehören zum Stand der Technik und werden weit verbreitet angewandt. Von den maskierten Polyisocyanaten haben sich als PUR-Pulverhärter ε-Caprolactam-blockierte Isophorondiisocyanataddukte durchgesetzt. Die mit diesen Härtern hergestellten PUR-Pulver nehmen infolge ihrer überlegenen Witterungs- und Wärmefarbstabilität eine hervorragende Stellung ein.

So werden in der DE-PS 21 05 777 als Härter von PUR-Pulvern wegen einer Reihe von Vorteilen insbesondere ε-Caprolactam-blockierte Addukte des IPDI und Di- bzw. Triolen genannt.

In der DE-PS 25 42 191 werden blockierte Polyisocyanate aus IPDI, ε-Caprolactam und einem Polyol, das ein Gemisch aus einem Diol und Triol ist, beansprucht sowie deren Verwendung zur Herstellung (in Kombination mit einem Hydroxylgruppen-enthaltenden Polymeren) von in der Hitze härtbaren pulverförmigen Überzugsmassen.

In der DE-PS 27 35 497 (≙ USP 4 246 380) werden pulverförmige PUR-Lacke aus hydroxylgruppenhaltigen Polyestern, Polyacrylaten oder Epoxidharzen beschrieben, die dadurch gekennzeichnet sind, daß als Polyisocyanatkomponente zur ε-Caprolactamblockierung das Isocyanatoisocyanurat und ggf. Oligomere zusammen mit monomerem IPDI eingesetzt werden.

In der DE-OS 27 07 656 (≙ USP 4 150 211) findet sich eine ähnliche Bindemittelkombination wie in der DE-PS 27 35 497, wobei als Härterkomponente ein partiell trimerisiertes IPDI/Hexamethylendiisocyanat- bzw. IPDI/Toluylendiisocyanat-Gemisch, dessen freie NCO-Gruppen mit ε-Caprolactam blockiert sind, eingesetzt wird.

In der DE-PS 30 04 876 werden blockierte Polyisocyanate beansprucht, die aus ε-Caprolactam blockierten Addukten des IPDI und Polyolen bestehen, wobei die Addukte pro OH-Äquivalent 3,3 - 8 NCO-Äquivalente enthalten. Mit diesen blockierten IPDI-Addukten werden Polyurethan-Pulverlacke hergestellt.

In der DE-PS 31 43 060 werden PUR-Pulver beschrieben, die als Härterkomponente Reaktionsprodukte enthalten, die durch Kettenverlängerung von IPDI mit einem aliphatischen Diamin und anschließende ε-Caprolactam-Blockierung erhalten werden. Die Aushärtung dieser Pulver erfolgt bei Temperaturen von 170 - 200 °C.

Es besteht großes Interesse, diese hohen Härtungstemperaturen zu reduzieren. Man versucht dies durch Einsatz von oximblockierten (cyclo)aliphatischen Polyisocyanaten zu erreichen. So werden z. B. oximblockierte Polyisocyanate und ihre Verwendung in Pulverlacken in der DE-OS 22 00 342, EP-OS 0 432 257, USP 3 857 818 beschrieben. In der EP-PS 0 401 343 werden PUR-Pulver beschrieben, die als Härterkomponente ein acetonoximblockiertes Trimethylolpropan-Tetramethylxylylendiisocyanataddukt enthalten; in der EP-PS 0 409 745 werden als PUR-Pulverhärter 2.4-Dimethyl-3-pentanonoxim- bzw. 2.6-Dimethyl-4-heptanonoxim-blockierte Isocyanurate des IPDI, Methylen-bis-4.4'-cyclohexylisocyanats und des m- und p-Tetramethylxylylendiisocyanats aufgeführt.

Gegenstand der EP-PS 0 531 862 ist ein Verfahren zur Herstellung von Pulverlacken mit einer Glasübergangstemperatur von 20 - 80 °C durch Vermischen von A) einer Polyolkomponente, B) eines ketonoximblockierten Polyisocyanats, C) einer Katalysatorkomponente, bestehend aus mindestens einem Katalysator für die Reaktion zwischen blockierten NCO-Gruppen und Hydroxylgruppen und ggf. D) weiteren aus der Pulverlacktechnologie bekannten Hilfs- und Zusatzmitteln, wobei man zur Herstellung der Pulverlacke die Komponenten A, B, C und ggf. D in einem inerten Lösungsmittel oder Lösungsmittelgemisch mit einem zwischen 50 °C und 150 °C liegenden Siedepunkt oder -bereich homogen löst, dann die dabei resultierende Lösung vom Lösungsmittel befreit.

Bei allen hier beschriebenen PUR-Pulvern wird die Härterkomponente separat hergestellt. Ihre Herstellung ist in der Regel problemlos, bereitet aber in zunehmendem Maße dann Schwierigkeiten, wenn die Schmelzbereiche der blockierten Polyisocyanataddukte in der Nähe der Deblockierungstemperatur des Reaktionsproduktes liegen, da beim Entleeren des Reaktors mit einer partiellen Deblockierung der blockierten Polyisocyanataddukte gerechnet werden muß.

Aufgabe der vorliegenden Erfindung ist es deshalb, ein einfaches Verfahren zur Herstellung von PUR-Pulvern bereitzustellen, das es gestattet, PUR-Pulver ohne die separate Herstellung der Härterkomponente herzustellen.

Überraschenderweise konnte diese Aufgabe dadurch gelöst werden, daß man mindestens ein Polyisocyanat, mindestens ein für die Blockierung der NCO-Gruppen benötigtes spezielles Blockierungsmittel, mindestens ein Polyol und ggf. weiteren Hilfs- und Zusatzmitteln wie z. B. Pigmente, Verlaufmittel und Oxidationsstabilisatoren bei 80 bis 120 °C in einer Knetkammer oder einem Extruder miteinander mischt und dabei zur Reaktion bringt.

Gegenstand der vorliegenden Erfindung ist somit ein Verfahren zur Herstellung von hitzehärtbaren, witterungsbeständigen PUR-Pulver-Massen, bestehend aus:
A) mindestens einem (cyclo)-aliphatischen Polyisocyanat mit einer NCO-Funktionalität von 2 - 6,
B) mindestens einem Blockierungsmittel für die Isocyanatgruppen,
C) mindestens einem Polyol mit einer OH-Funktionalität von 2 - 5,
D) ggf. weiteren Hilfs- und Zusatzmitteln,
dadurch gekennzeichnet, daß man die Komponenten A - C und ggf. D bei 80 bis 120 °C in einer Knetkammer oder einem Extruder miteinander mischt und dabei zur Reaktion bringt, wobei pro NCO-Äquivalent 0.7 - 1 OH-Äquivalente des Polyols und 0.5 - 1 mol Oxim B zur Reaktion gebracht werden.

(Cyclo)-aliphatische Polyisocyanate im Sinne der Erfindung sind - unabhängig von ihrem Aggregatzustand - alle (cyclo)-aliphatischen Polyisocyanate mit einer NCO-Funktionalität von 2 - 6. Bevorzugt werden jedoch solche Polyisocyanate, die einen Schmelzpunkt ≧ 50 °C aufweisen. Solche festen Polyisocyanate werden durch Molekülvergrößerung von (cyclo)-aliphatischen Diisocyanaten nach bekannten Methoden, wie z. B. durch Trimerisierung, durch Umsetzung mit unterschüssigen Mengen eines Polyols oder auch durch Wasser erhalten. Bevorzugt werden das Trimere Isophorondiisocyanat (IPDI) (Isocyanurat des IPDI) und das IPDI-Trimethylolpropanaddukt (NCO:OH = 2:1) als NCO-Komponente für das erfindungsgemäße Verfahren eingesetzt.

Von den Oximen, die nach dem erfindungsgemäßen Verfahren zur Blockierung der NCO-Komponente in Frage kommen, sind es solche, die durch Umsetzung eines Ketons mit Hydroxylamin erhalten werden. Auch hier werden bevorzugt die Oxime mit einem Schmelzpunkt ≧ 50 °C, wie z. B. Acetonoxim, Cyclohexanonoxim, Acetophenonoxim, Benzophenonoxim, Cyclopentanonoxim, eingesetzt.

Als Polyolkomponente zur Herstellung der erfindungsgemäßen PUR-Pulverlacke kommen grundsätzlich alle OH-Gruppen enthaltenden Polymere in Frage, wie z. B. Epoxidharze, Hydroxyacrylate, bevorzugt werden jedoch hydroxylgruppenhaltige Polyester mit einer OH-Funktionalität von 2 - 5, bevorzugt 3 - 4.2, ein mittleres Molgewicht von 1800 - 5000, bevorzugt 2300 - 4500, einer OH-Zahl von 25 - 120 mg KOH/g, bevorzugt 30 - 90 mg KOH/g und einem Schmelzpunkt von ≧ 70 bis ≦ 120 °C, bevorzugt ≧ 75 bis ≦ 100 °C.

Für die Herstellung der Polyester bevorzugte Carbonsäuren können aliphatischer, cycloaliphatischer, aromatischer und/oder heterocyclischer Natur sein und gegebenenfalls durch Halogenatome substituiert und/oder ungesättigt sein. Als Beispiele hierfür seien genannt:
Bernstein-, Adipin-, Kork-, Azelain-, Sebacin-, Phthal-, Terephthal-, Isophthal-, Trimellith-, Pyromellith-, Tetrahydrophthal-, Endomethylentetrahydrophthal-, Glutar-, Malein- und Fumarsäure bzw. - soweit zugänglich - deren Anhydride, Terephthalsäuredimethylester, weiterhin cyclische Monocarbonsäuren, wie Benzoesäure, p-tert.-Butylbenzoesäure oder Hexahydrobenzoesäure.

Als mehrwertige Alkohole zur Herstellung der für das erfindungsgemäße Verfahren einzusetzenden Polyester kommen z. B. Ethylenglykol, Propylenglykol-1.2 und -1.3, Butylenglykol-1.4 und -2.3, Hexandiol-1.6, Octandiol-1.8, Neopentylglykol, Cyclohexandiol, Bis-(1.4-hydroxymethyl)-cyclohexan, 2.2-Bis-(4-hydroxycyclohexyl)-propan, 2.2-Bis-{4-(β-hydroxyethoxy)-phenyl}-propan, 2-Methyl-propandiol-1.3, 3-Methyl-pentandiol-1.5, 2.2.4(2.4.4)-Trimethylhexandiol-1.6, Glycerin, Trimethylolpropan, Trimethylolethan, Hexantriol-1.2.6, Butantriol-1.2.4, Tris-(β-hydroxyethyl)isocyanurat, Pentaerythrit, Marnnit und Sorbit, sowie Diethylenglykol, Triethylenglykol, Tetraethylenglykol, Dipropylenglykol, Polypropylenglykole, Polybutylenglykole, Xylylenglykol und Hydroxypivalinsäureneopentylglykolester in Frage.

Die Polyester können auf an sich bekannte Weise durch Kondensation in einer Inertatmosphäre bei Temperaturen von 100 - 260 °C, vorzugsweise 130 - 220 °C, in der Schmelze oder in azeotroper Fahrweise gewonnen werden, wie es z. B. in Methoden der Organischen Chemie (Houben-Weyl), Bd. 14/2, 1 - 5, 21 - 23, 40 - 44, Georg Thieme Verlag, Stuttgart, 1963, beschrieben ist.

Bevorzugte Acrylatharze, welche als OH-Komponenten verwendet werden können, sind Homo- oder Copolymerisate, wobei z. B. folgende Monomere als Ausgangsprodukte gewählt werden können:
Ester der Acrylsäure und Methacrylsäure mit zweiwertigen, gesättigten, aliphatischen Alkoholen mit 2 - 8 C-Atomen, wie z. B. 2-Hydroxyethylacrylat, 2-Hydroxypropylacrylat, 4-Hydroxybutylacrylat und die entsprechenden Methacrylsäureester.

Als weitere Hilfs- und Zusatzstoffe können Katalysatoren, Pigmente, Füllstoffe und Verlaufsmittel im erfindungsgemäßen Verfahren eingesetzt werden.

Nach dem erfindungsgemäßen Verfahren werden, für den Fall, daß alle Komponenten fest sind, die Komponenten einzeln gemahlen und in einem Kollergang innig vermischt und anschließend im Extruder bei 80 -120 °C homogenisiert. Man kann natürlich die Komponenten - NCO-Komponente, Oxim, OH-Komponente, Verlaufsmittel, Pigment - auch einzeln bei 80 - 120 °C in den Extruder zudosieren, wobei allerdings darauf geachtet werden muß, daß die NCO-Komponente zum Schluß zugegeben wird. Wenn das Oxim und/oder die NCO-Komponente flüssig sind, kommt zur Homogenisierung im Extruder nur die "Einzelzudosierung, wie gerade beschrieben, in Frage.

Die extrudierte Masse wird nach Abkühlen auf Raumtemperatur und nach geeigneter Zerkleinerung zum sprühfertigen Pulver vermahlen. Das Auftragen des sprühfertigen Pulvers auf geeignete Substrate kann nach den bekannten Verfahren, wie z. B. durch elektrostatisches Pulversprühen, Wirbelsintern, elektrostatisches Wirbelsintern, erfolgen. Nach dem Pulverauftrag werden die beschichteten Werkstücke zur Aushärtung 60 bis 10 Minuten auf eine Temperatur von 140 - 200 °C, vorzugsweise 30 - 10 Minuten bei 160 - 180 °C, erhitzt.

### A) Ausgangsverbindungen für das erfindungsgemäße Verfahren

### I. NCO-Komponente

| Beispiel Nr. | NCO-Komponente | NCO [%] | Schmelzbereich [°C] | Monomer [%] |
|---|---|---|---|---|
| A.I.1.*) | Isocyanurat des IPDI | 17.2 | 92 - 96 | 0.5 |
| A.I.2.**) | Isocyanurat des Hexamethylendiisocyanats | 21.6 | 3 000 mPa·s bei 25 °C | 0.2 |
| A.I.3.***) | Trimethylolpropanaddukt des IPDI | 14.5 | 115 - 122 | 6.0 |

| | | | | |
|---|---|---|---|---|
| *) Verkaufsprodukt der Hüls AG (VESTANAT T 1890) | | | | |
| **) Verkaufsprodukt der Bayer AG (DESMODUR N 3300) | | | | |
| ***) Wird durch Reaktion von 1 mol Trimethylolpropan und 3 mol IPDI hergestellt | | | | |

### II. Polyol-Komponente

### Beispiel 1

In den Anwendungsbeispielen wurde als Polyolkomponente ein hydroxylgruppenhaltiger Polyester der Fa. Hoechst eingesetzt. Der Polyester ist gemäß dem Hersteller durch folgende Kennzeichen charakterisiert:

| | |
|---|---|
| OH-Zahl: | 55 - 60 mg KOH/g |
| Säurezahl: | 3 - 5 mg KOH/g |
| Schmelzbereich: | 70 - 75 °C |
| Glasumwandlungstemperatur: | 50 °C |
| Viskosität bei 160 °C: | 28 000 mPa·s |

### Beispiel 2

Die Ausgangskomponenten, 10 mol Terephthalsäure, 10 mol Dimethylterephthalat, 6.25 mol Hexandiol-1.6, 10.5 mol Neopentylglykol, 2 mol 1.4-Dimethylolcyclohexan und 2.9 mol Trimethylolpropan werden in einen Reaktor gegeben und mit Hilfe eines Ölbades erhitzt. Nachdem die Stoffe zum größten Teil aufgeschmolzen sind, werden bei einer Temperatur von 160 °C 0.05 Gew.-% Di-n-butylzinnoxid als Katalysator zugesetzt. Die erste Methanolabspaltung tritt bei einer Temperatur von ca. 170 °C ein. Innerhalb von 6 bis 8 Stunden wird die Temperatur auf 220 bis 230 °C erhöht und innerhalb weiterer 12 bis 15 Stunden die Reaktion zu Ende geführt. Der Polyester wird auf 200 °C abgekühlt und durch Anlegen von Vakuum (1.33 mbar) innerhalb 30 bis 45 Minuten weitgehend von flüchtigen Anteilen befreit. Während der gesamten Reaktionszeit wird das Sumpfprodukt gerührt und ein schwacher N₂-Strom durch das Reaktionsgemisch geleitet.

Der hydroxylgruppenhaltige Polyester weist folgende Kenndaten auf:

| | |
|---|---|
| OH-Zahl: | 55 - 60 mg KOH |
| Säurezahl: | 3 - 4 mg KOH/g |
| Schmelzbereich: | 73 - 78 °C |
| Glasumwandlungstemperatur: | ≈ 50 °C |
| Viskosität bei 160 °C: | 25 000 mPa·s |

### B. Herstellung der erfindungsgemäßen PUR-Pulverlacke

Die gemahlenen Produkte - die NCO-Komponente, die Polyolkomponente, Verlaufsmittel, Weißpigment und Benzoin - werden in einem Kollergang innig vermischt und anschließend im Extruder bei 80 - 120 °C homogenisiert. Nach dem Erkalten wird das Extrudat gebrochen und mit einer Stiftmühle auf eine Korngröße < 100 µm gemahlen. Das so hergestellte Pulver wird mit einer elektrostatischen Pulverspritzanlage bei 60 kV auf entfettete, gegebenenfalls vorbehandelte Eisenbleche appliziert und in einem Umlufttrockenschrank bei Temperaturen zwischen 160 und 180 °C eingebrannt.

### Beispiel 1

Nach dem beschriebenen Verfahren wurde der Pulverlack mit folgender Rezeptur hergestellt, appliziert und zwischen 160 und 180 °C eingebrannt.
104.6 Gew.-T. Polyisocyanat A.I.1. (T 1890)
58.3 Gew.-T. Acetophenonoxim
432.1 Gew.-T. Polyester A.II.1.
400.0 Gew.-T. Weißpigment (TiO₂)
5.0 Gew.-T. Benzoin

| Einbrennbedingungen | Mechanische Kenndaten | | | | | | |
|---|---|---|---|---|---|---|---|
| | SD | HK | HB | ET | GS | Imp. rev. | GG 60 °∢ |
| Zeit/Temp. min / °C | | | | | | | |
| 30 / 180 | 70 - 80 | 195 | 111 | > 10 | 0 | > 944.6 | 87 |
| 30 / 160 | 60 - 70 | 190 | 111 | > 10 | 0 | > 944.6 | 87 |

### Beispiel 2

Nach dem beschriebenen Verfahren wurde der Pulverlack mit folgender Rezeptur hergestellt, appliziert und zwischen 160 und 180 °C eingebrannt.
106.2 Gew.-T. Polyisocyanat A.I.1. (T 1890)
49.6 Gew.-T. Cyclohexanonoxim
439.2 Gew.-T. Polyester A.2.2.
400.0 Gew.-T. Weißpigment (TiO₂)
5.0 Gew.-T. Benzoin

| Einbrennbedingungen | Mechanische Kenndaten | | | | | | |
|---|---|---|---|---|---|---|---|
| | SD | HK | HB | ET | GS | Imp. rev. | GG 60 °∢ |
| Zeit/Temp. min / °C | | | | | | | |
| 30 / 180 | 65 - 80 | 194 | 111 | > 10 | 0 | > 944.6 | 88 |
| 30 / 160 | 60 - 70 | 192 | 111 | 6.9 - 8.5 | 0 | 115.2 | 86 |

### Beispiel 3

Nach dem beschriebenen Verfahren wurde der Pulverlack mit folgender Rezeptur hergestellt, appliziert und zwischen 160 und 180 °C eingebrannt.
107.3 Gew.-T. Polyisocyanat A.I.1. (T 1890)
43.9 Gew.-T. Cyclopentanonoxim
443.8 Gew.-T. Polyester A.2.1.
400.0 Gew.-T. Weißpigment (TiO₂)
5.0 Gew.-T. Benzoin

| Einbrennbedingungen | Mechanische Kenndaten | | | | | | |
|---|---|---|---|---|---|---|---|
| | SD | HK | HB | ET | GS | Imp. rev. | GG 60 °∢ |
| Zeit/Temp. m in / °C | | | | | | | |
| 30 / 180 | 50 - 60 | 188 | 125 | > 10 | 0 | > 944.6 | 84 |
| 30 / 160 | 60 - 70 | 192 | 125 | > 10 | 0 | > 944.6 | 85 |

### Beispiel 4

Nach dem beschriebenen Verfahren wurde der Pulverlack mit folgender Rezeptur hergestellt, appliziert und zwischen 160 und 180 °C eingebrannt.
120.9 Gew.-T. Polyisocyanat A.I.3.
56.4 Gew.-T. Acetophenonoxim
417.7 Gew.-T. Polyester A.II.1.
400.0 Gew.-T. Weißpigment
5.0 Gew.-T. Benzoin

| Einbrennbedingungen | Mechanische Kenndaten | | | | | | |
|---|---|---|---|---|---|---|---|
| | SD | HK | HB | ET | GS | Imp. rev. | GG 60 °∢ |
| Zeit/Temp. min / °C | | | | | | | |
| 30 / 180 | 50 - 55 | 186 | 125 | > 10 | 0 | > 944.6 | 85 |
| 30 / 160 | 50 | 193 | 125 | > 10 | 0 | > 944.6 | 86 |

Sind die NCO-Komponente und/oder das Oxim flüssig und somit nicht mahlbar, kann der erfindungsgemäße Pulverlack nicht wie in den Beispielen 1 - 4 hergestellt werden. In solchen Fällen muß nach der in Beispiel 5 beschriebenen Herstellung verfahren werden.

### Beispiel 5

In einer Knetkammer werden bei 100 °C 22.9 Gew.-T. Polyester A.II.1. mit 20 Gew.-T. TiO₂ intensiv gemischt. Anschließend erfolgt die (langsame) Zudosierung von 2.65 Gew.-T. MIBK-oxim. Nach erfolgter Homogenisierung werden 4.45 Gew.-T Polyisocyanat A.I.2. portionsweise zugegeben. Danach wird noch ca. 5 min geknetet.

Anschließend wird die Knetkammer entleert und die erstarrte Knetmasse, wie in den Beispielen 1 - 4 beschrieben, weiter behandelt.

| Einbrennbedingungen | Mechanische Kenndaten | | | | | | |
|---|---|---|---|---|---|---|---|
| | SD | HK | HB | ET | GS | Imp. rev. | GG 60 °∢ |
| Zeit/Temp. min / °C | | | | | | | |
| 30 / 180 | 60 - 70 | 170 | 111 | > 10 | 0 | > 944.6 | 85 |
| 30 / 160 | 65 - 80 | 172 | 111 | > 10 | 0 | > 944.6 | 86 |

Die Abkürzungen in den vorherigen Tabellen bedeuten: SD = Schichtdicke in µm
HK = Pendeldämpfung n. König in sec (DIN 53 157)
HB = Härte nach Buchholz (DIN 53 153)
ET = Tiefung nach Erichsen in mm (DIN 53 156)
GS = Gitterschnittprüfung (DIN 53 151)
GG 60 °∢ = Messung des Glanzes nach Gardner (ASTM-D 523)
Imp. rev. = Impact reverse in g · m

## Patentansprüche

1. Verfahren zur Herstellung von hitzehärtbaren, witterungsbeständigen PUR-Pulver-Massen, bestehend aus
A) mindestens einem (cyclo)-aliphatischen Polyisocyanat mit einer NCO-Funktionalität von 2 - 6,
B) mindestens einem Blockierungsmittel für die Isocyanatgruppen,
C) mindestens einem Polyol mit einer OH-Funktionalität von 2 - 5,
D) ggf. weiteren Hilfs- und Zusatzmitteln,
dadurch gekennzeichnet,
daß man die Komponenten A - C und ggf. D bei 80 bis 120 °C in einer Knetkammer oder einem Extruder miteinander mischt und dabei zur Reaktion bringt, wobei pro NCO-Äquivalent 0.7 - 1 OH-Äquivalente des Polyols und 0.5 - 1 mol Oxim B zur Reaktion gebracht werden.

2. Verfahren nach Anspruch 1,
dadurch gekennzeichnet,
daß die Aushärtung der Pulvergemische bei 140 - 200 °C innerhalb von 60 - 10 Minuten erfolgt.
